# EUROPÄISCHE PATENTANMELDUNG

(11) **EP 0 847 788 A1**
(43) Veröffentlichungstag der Anmeldung: **17.06.1998**
(21) Anmeldenummer: 97120044.9
(22) Anmeldetag: 15.11.1997
(51) Int. Cl.: B01D 46/42, E04H 5/02

(54) **Entstaubungsanlage**

(30) Priorität: 14.12.1996 DE 19652160
(71) Anmelder: British-American Tobacco (Germany) GmbH, D-20354 Hamburg (DE)
(72) Erfinder: Kanzler, Martin, 86637 Wertingen (DE); Teichert, Hermann, 26215 Wiefelstede-Metjendorf (DE)
(74) Vertreter: Meyer, Ludgerus A., Dipl.-Ing.

(57) **Zusammenfassung**

Es wird eine Entstaubungsanlage zur Abscheidung von Stäuben aus einem staubhaltigen Gasstrom, insbesondere bei der Cigarettenherstellung, angegeben, bei der der Gasstrom über ein Staubabscheidefilter (3) geführt und das gereinigte Gas mittels eines Gebläses (13) an die Umgebung abgegeben wird. Der abgeschiedene Staub wird über eine Transportleitung (8, 20) zu einer Staubsammelstelle geführt. Erfindungsgemäß ist die Entstaubungsanlage in ein aus zwei zusammengesetzten Containern (1, 2) bestehendes Raummodul eingebaut, wobei jeder Container Teile der Entstaubungsanlage trägt und die Container am Einsatzort zur Bildung der Entstaubungsanlage zusammensetzbar ausgebildet sind.

## Beschreibung

Die Erfindung betrifft eine Entstaubungsanlage zur Abscheidung von Stäuben aus einem Gasstrom, insbesondere bei der Cigarettenherstellung, nach dem Oberbegriff des Anspruchs 1.

Bei der Herstellung von Cigaretten entstehen in verschiedenen Fertigungsstufen Stäube, die durch geeignete Filtereinrichtungen aus der Luft abzuscheiden sind. Ein großer Teil der Stäube kann einer Widerverwertung zugeführt werden, da es sich im wesentlichen um Tabakstäube handelt.

Bisher wurden Entstaubungsanlagen in der Regel unmittelbar in den Fertigungshallen den Bereichen zugeordnet, in denen die Hauptlast an Stäuben anfällt. Die Entstaubungsanlagen wurden auch in abgesonderten Räumen untergebracht, insbesondere aus Lärmschutzgründen.

In Fertigungshallen ist es jedoch immer wieder erforderlich, Maschinenaufstellungen zu ändern, wodurch der Entstehungsort und die zu entstaubenden Luftmengen variieren können. Fest installierte Entstaubungsanlagen sind damit an die neuen Gegebenheiten anzupassen.

Zur Klimatisierung von Räumen ist es aus der EP 0 551 945 A1 bekannt, eine an der Decke zu montierende Klimatisierungseinrichtung zu verwenden, die aus mehreren einzelnen in der Größe gleichartigen Modulen zusammengesetzt ist. Jedes Modul trägt dabei eine Arbeitseinheit, beispielsweise trägt ein Modul ein Filter, das andere Modul einen Ventilator und das dritte Modul eine Steuerklappe. Eine derartige Modulbauweise ist jedoch nicht für sehr große Volumenströme geeignet.

Eine vom Prinzip her ähnliche Einrichtung, die als Staubabsaugeeinrichtung ausgeführt ist, ist aus der EP 0 623 397 A1 bekannt. Dort werden ebenfalls mehrere Agregate verwendet, die in getrennten, miteinander verbindbaren rechteckigen Gehäusen untergebracht sind. In einem Gehäuse befindet sich beispielsweise ein Filter und in einem anderen Gehäuse das Gebläse und der Schalldämpfer. Diese Einrichtung ist ebenfalls nicht für große Volumenströme einsetzbar.

Der Erfindung liegt die Aufgabe zugrunde, eine Entstaubungsanlage zur Abscheidung von Stäuben aus einem Gasstrom, insbesondere bei der Cigarettenherstellung, anzugeben, die für sehr hohe Volumenströme geeignet ist, die gleichwohl transportabel ist und an wechselnde Einsatzbedingungen anpaßbar ist.

Diese Aufgabe wird durch die im Anspruch 1 angegebene Erfindung gelöst. Vorteilhafte Weiterbildungen der Erfindung sind in Unteransprüchen angegeben.

Gemäß der Erfindung sind zwei zusammensetzbare Container vorgesehen, die zusammengesetzt ein Raummodul bilden, in dem die Entstaubungsanlage untergebracht ist. Jeder der Container trägt einen Teil der Entstaubungsanlage, wobei einzelne Teile der Entstaubungsanlage auch Platz in beiden Container einnehmen können. Die Container werden zur Bildung der Entstaubungsanlage erst am Einsatzort zusammengesetzt, wobei beide Container berührende Teile der Entstaubungsanlage beim Zusammensetzen der Container ebenfalls miteinander verbunden werden. Dadurch bildet jeweils ein Container eine Transporteinheit, und jeweils zwei Container bilden eine Raumeinheit einer Entstaubungsanlage. Es können ohne weiteres mehrere Raumeinheiten zu einer größeren Mehrfach-Entstaubungsanlage zusammengesetzt werden. Dabei sind insbesondere die Transportleitungen zur Abführung der abgeschiedenen Stäube quer durch alle Raumeinheiten geführt.

Vorzugsweise enthält jede Raumeinheit eine doppelte Transportleitung zur Abführung der abgeschiedenen Stäube, wobei eine Umschalteinrichtung zur wahlweisen Anschaltung einer der Transportleitungen an den oder die Staubabscheidefilter vorgesehen ist. Die Umschaltung kann sowohl zur besseren Kapazitätsauslastung der Staubsammelstellen verwendet werden als auch zur Abfuhr unterschiedlicher Stäube aus unterschiedlichen Raummodulen, denen staubhaltige Gasströme aus unterschiedlichen Fertigungsstufen zugeführt werden.

Zur Abtrennung der Transportleitungen von den Filtereinheiten in einem Raummodul sind insbesondere Zellenradschleusen vorgesehen.

Die Raumeinheiten sind vorzugsweise klimatisiert, um die bei hohen Volumenströmen und Abscheideleistungen entstehende Wärme in den Raummodulen abführen zu können.

Vorzugsweise werden die verwendeten Staubabscheidefilter in regelmäßigen oder unregelmäßigen zeitlichen Abständen mittels impulsförmiger Druckluftzufuhr im Gegenstrom gereinigt.

Erfindungsgemäße Entstaubungsanlagen können insbesondere auf dem Dach eines Fabrikgebäudes zur Cigarettenherstellung aufgebaut werden.

Durch die Erfindung wird eine Entstaubungsanlage geschaffen, die leicht transportierbar ist, dem Entstaubungsbedarf durch Zusammenschaltung mehrerer Einheiten anpaßbar ist, die raumbeweglich ist und kostengünstig herstellbar ist.

Die Erfindung wird nachstehend anhand eines Ausführungsbeispiels näher erläutert. Es zeigen:
- Fig. 1: eine Querschnittansicht durch eine Entstaubungsanlage nach der Erfindung,
- Fig. 2: eine Entstaubungsanlage nach Fig 1 im seitlichen Querschnitt,
- Fig. 3: eine Schnittzeichnung entlang der Ebene A-A von Fig. 1,
- Fig. 4: eine Schnittansicht entlang der Ebene B-B von Fig. 1,
- Fig. 5: eine Schnittansicht entlang der Ebene C-C von Fig. 1,
- Fig. 6: eine Schnittansicht entlang der Ebene D-D von Fig. 1,
- Fig. 7: eine Mehrfach-Entstaubungsanlage mit mehreren nebeneinander aufgestellten Modulen gemäß Fig. 1,
- Fig. 8: eine horizontale Schnittansicht einer Mehrfach-Entstaubungsanlage entlang der Ebene B-B von Fig. 7,
- Fig. 9: eine horizontale Schnittansicht einer Entstaubungsanlage entlang der Ebene D-D von Fig. 7, und
- Fig. 10: eine Seitenansicht einer Mehrfach-Entstaubungsanlagen.

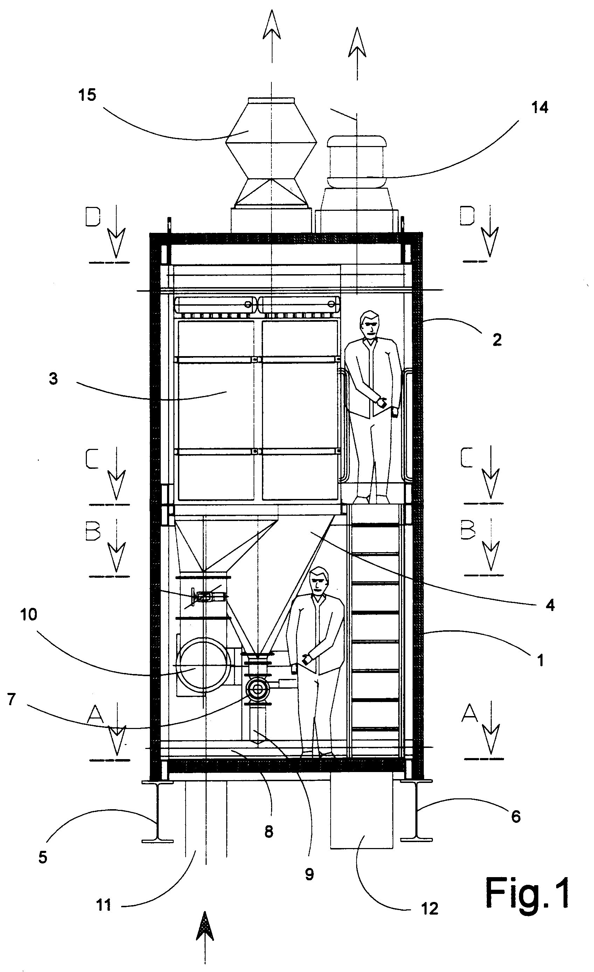

Die in Fig. 1 gezeigte Entstaubungsanlage ist in zwei Container-ähnlichen Raumeinheiten aufgebaut. Die Container können, ohne darauf beschränkt zu sein, international standardisierten Containermaßen entsprechen. Die beiden Container 1, 2 sind übereinandergestellt, wobei das gesamte Modul auf Trägern 5, 6 aufgestellt ist. Der Container 1 ist oberseitig offen, während der Container 2 unterseitig geöffnet ist. Damit ergibt sich eine innere Raumhöhe der Raumeinheit in etwa der doppelten Containerhöhe, die nur durch quer verlaufende Stützträger unterbrochen ist.

Innerhalb des Raummoduls befindet sich ein Staubabscheidefilter 3 mit unten angesetztem Trichter 4. Der Auslaß des Trichters 4 führt auf eine Zellenradschleuse 7. Der durch die Schleuse 7 geführte Staub wird über den Stutzen 9 auf eine quer durch das Modul laufende Transportleitung 8 geführt, die den abgeschiedenen Staub an eine nicht dargestellte Staubsammelstelle überführt.

Der zu entstaubende Gasstrom wird über ein Zufuhrrohr 11 dem Staubabscheidefilter 3 zugeführt. Der in dem Staubabscheidefilter 3 gefilterte Luftstrom wird über das Abgasrohr 10 und dem in Fig. 1 nicht dargestelltem Gebläse zum Abgasauslaß 15 geführt.

Zur Lüftung des Raummoduls oberhalb der Taupunkttemperatur sind ein Luftzufuhrrohr 12 und ein Abluftauslaß 14 vorgesehen. Der Abluftauslaß 14 besteht aus einem Brandgas-Dachradialventilator mit einem vorgeschalteten Kulissenschalldämpfer. Diese Lüftung dient im Brandfall auch der Entrauchung.

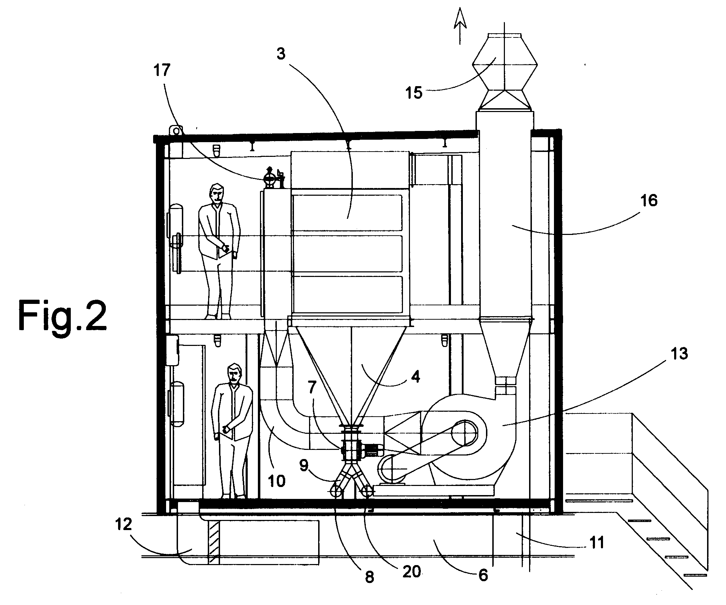

Fig. 2 zeigt eine Querschnitts-Seitenansicht der Entstaubungsanlage von Fig. 1. Der zu reinigende Gasstrom wird über das Zufuhrrohr 11 an den Staubabscheidefilter 3 herangeführt und dort gereinigt. Die Abluft flielßt über das Abgasrohr 10 an einen über einen Motor 21 angetriebenen Radialventilator 13, der das Abgas über einen Kulissenschalldämpfer 16 an den Abgasauslaß 15 führt.

In dem Staubabscheidefilter, der in der Lage ist, bis zu 9000 m³ / h Luftdurchsatz zu verarbeiten, ist eine Staubabscheidung bis auf eine Reststaubmenge von z. B. 20 mg / m³ möglich.

Zur Reinigung des Staubabscheidefilters 3 ist eine Druckluftzufuhr 17 vorgesehen, über die Druckstöße im Gegenstrom auf die Spezialfiltergewebetaschen des Staubabscheidefilters, beispielsweise aus Polyester-Nadelfilz, geführt werden können. Damit ist ein Mehrschichtbetrieb ohne Unterbrechung möglich.

Der im Filter abgeschiedene Staub wird mittels der Zellenradschleuse 7 drucklos über eine Weiche über die Transportleitung 8 bzw. 20 ausgetragen. Die Rohrleitungen 8, 20 führen zu einer externen Staubsammelstelle.

Zur Kühlung der Anlagenkomponenten in der Entstaubungsanlage und zur Abführung der Motorwärme des Radiallüfters 13 saugt der Brandgas-Dachradialventilator 14, mittels eines Thermostaten geschaltet, über einen Schalldämpfer Außenluft durch das Luftzufuhrrohr 12 in die Entstaubungsanlage und fördert die erwärmte Luft ins Freie.

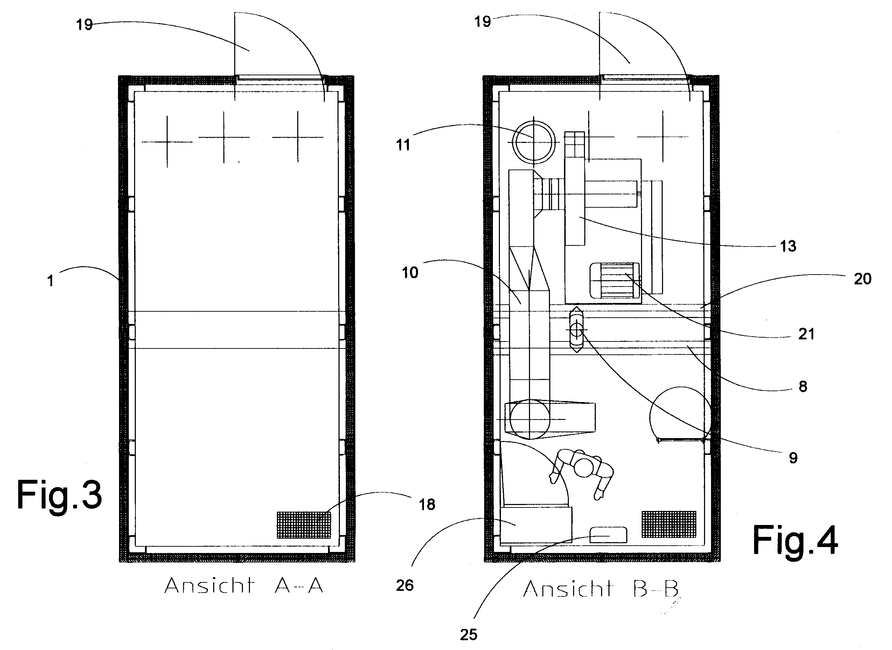

In Fig. 3 ist eine Grundrißansicht entlang der Ebene A-A von Fig. 1 dargestellt. Es ist deutlich das Einlaßrohr 18 für die Lüftung der Entstaubungsanlage zu erkennen.

Fig. 4 zeigt eine horizontale Ansicht entlang der Ebene B-B von Fig. 1. Hierin ist insbesondere die Stellung des Radiallüfters 13, die Führung der Transportleitungen 8, 20 quer durch die Anlage und die Anordnung des Stutzens 9 am unteren Ende des Staubabscheidefilters zu erkennen. Ferner ist die Lage des Zufuhrrohrs 11 dargestellt. Für einen Zutritt zur Entstaubungsanlage ist eine Tür 19 vorgesehen.

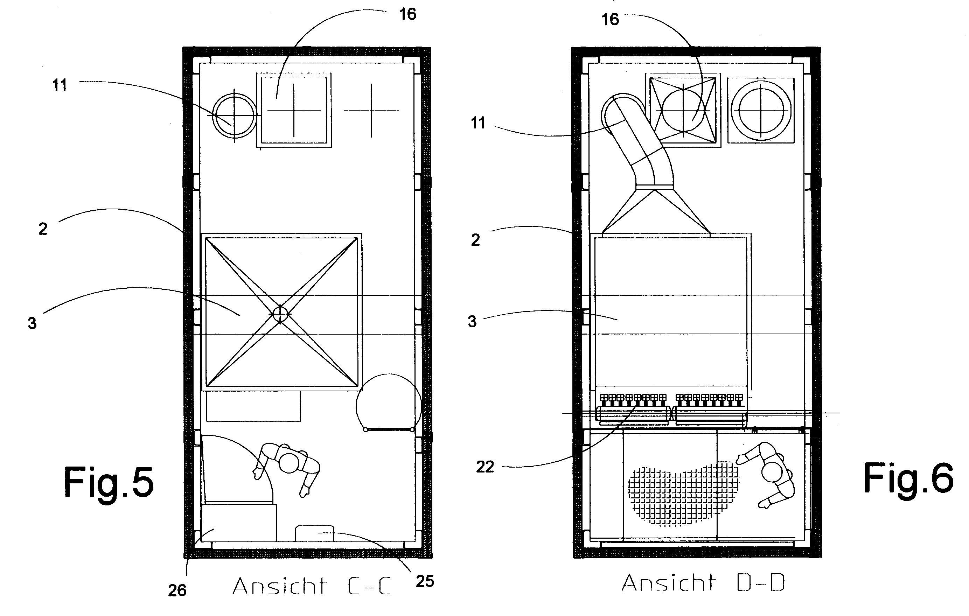

Fig. 5 zeigt eine Schnittansicht der Ebene C-C von Fig. 1. Es ist erkennbar, daß der Staubabscheidefilter 3 im wesentlichen zentral in der Entstaubungsanlage aufgestellt ist. Mit der Ziffer 16 ist ein Schnitt durch den Kulissenschalldämpfer zur Abfuhr des gereinigten Gases dargestellt.

Fig. 6 zeigt eine Schnittansicht entlang der Ebene D-D von Fig. 1 Die Figur zeigt die Überführung des staubhaltigen Gases über das Zufuhrrohr 11 zur Filtereinheit 3. Auf der gegenüberliegenden Seite sind Reinigungsdüsen 22 dargestellt, die zur Abreinigung der Filtereinheit mittels Druckstößen dienen.

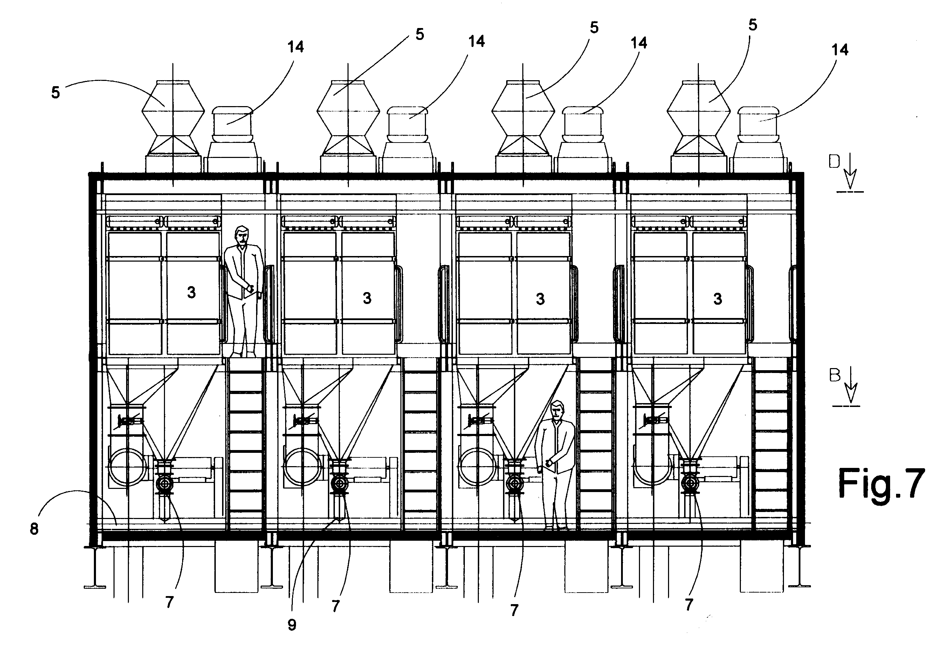

Obgleich die in den zuvor genannten Figuren dargestellte Entstaubungsanlage eigenständig verwendbar ist, können mehrere derartiger Einheiten gemäß Fig. 7 zu einer größeren Mehrfach-Entstaubungsanlage zusammengesetzt werden. In diesem Fall werden die Trennwände zwischen nebeneinanderstehenden Raumeinheiten entfernt, so daß ein größerer, nur durch Tragstützen unterbrochener Raum zur Verfügung steht.

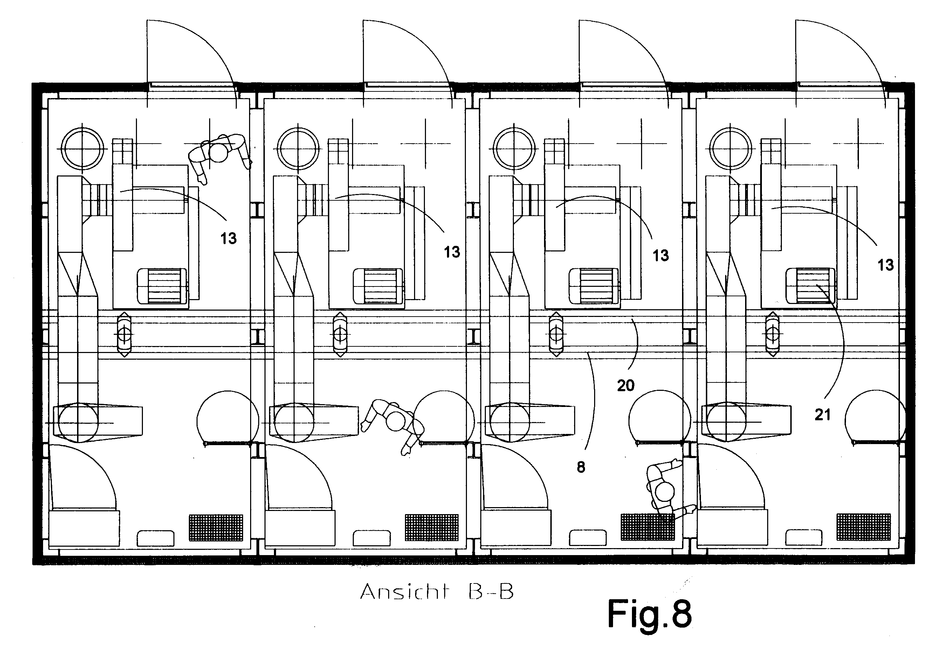

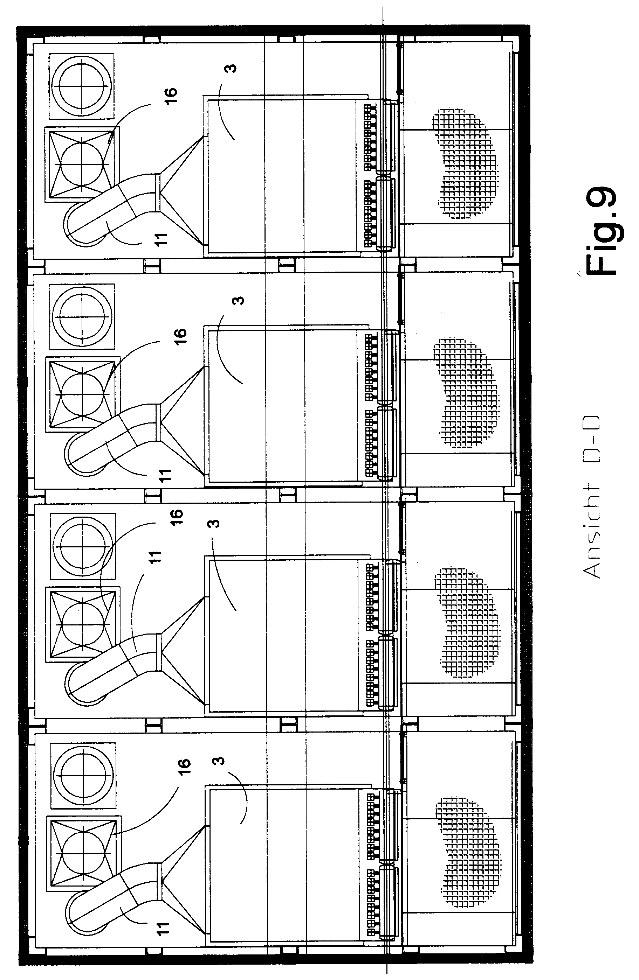

Fig. 8 zeigt eine Mehrfach-Entstaubungsanlage in Grundrißansicht, geschnitten entlang der Ebene B-B. Eine entsprechende Grundrißansicht entlang der Ebene D-D ist in Fig. 9 gezeigt.

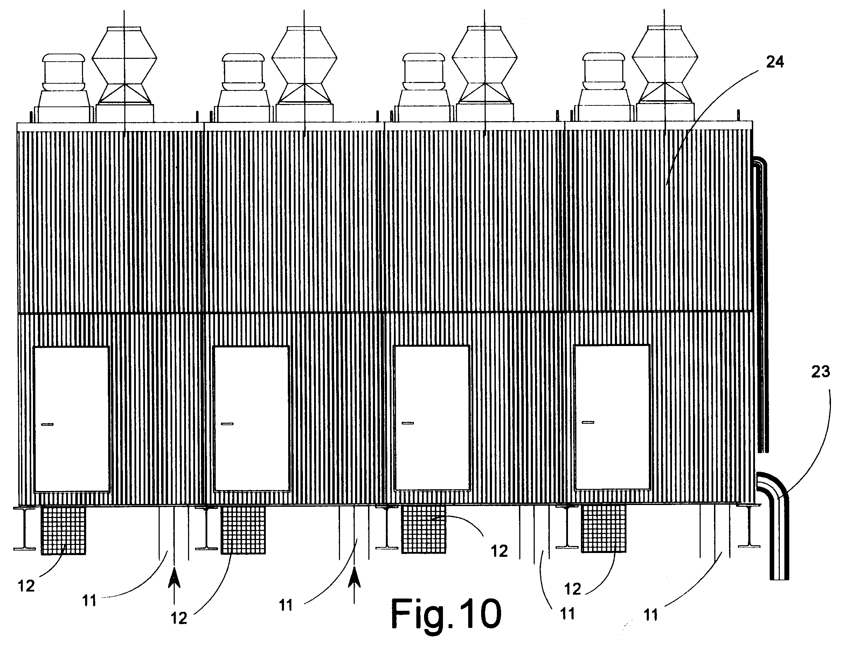

Fig. 10 zeigt eine Außenansicht einer Mehrfach-Entstaubungsanlage, wobei deutlich die Zufuhrrohre 11 sowie Luftzufuhrrohre 12 dargestellt sind. Die Abfuhrleitung 23 dient zur Überführung der abgeschiedenen Stäube an die Sammelstelle.

Die Seitenwände 24 können bereits fabrikmäßig oder nachträglich mit schalldämpfenden Materialien versehen werden. Sämtliche Seitenwände 24 bestehen aus den Anforderungen angepaßte Paneelwände mit den entsprechenden Schalldämmwerten R'w.

Die Entstaubungsanlage ist mit einer Luftheizung 25 zur Aufrechterhaltung der Raumtemperatur während der Stillstandzeiten über dem Taupunkt ausgerüstet. Die Luftheizung 25 enthält einen Radialventilator, einen Luftfilter in Beutelbauart, einen Lufterhitzer, ein Ansaug-Mischelement und ein Luftverteilerrohr. Es wird als Heizmittel für den Lufterhitzer wahlweise Strom, Pumpenwarmwasser oder Dampf zugeführt. Ein fest eingestellter Minimal-Außenluftanteil ergänzt die Transportluft für die Staubentsorgung.

Der in den Figuren 4 und 5 dargestellte Schaltschrank 26 kann autark betrieben werden; er kann aber auch mit weiteren Schaltschränken in anderen Modulen kombiniert werden.

Bei einer ausgeführten Entstaubungsanlage wies der Staubabscheidefilter 3 eine Filterfläche von 84 m² auf, welche in der Lage war, einen Volumenstrom von 8400 m³ / h bei einer Filterflächenbelastung von 100 m³ / m² / h bis auf einen Reingasstaubgehalt von « 20 mg / m³ zu entstauben. Die Förderleistung der Zellenradschleuse 7 betrug 8,5 m³ / h.

### Bezugszeichenliste

- 1: Container
- 2: Container
- 3: Staubabscheidefilter
- 4: Trichter
- 5: Träger
- 6: Träger
- 7: Zellenradschleuse
- 8: Transportleitung
- 9: Stutzen
- 10: Abgasrohr
- 11: Zufuhrrohr
- 12: Luftzufuhrrohr
- 13: Radialventilator
- 14: Abluftauslaß
- 15: Abgasauslaß
- 16: Schalldämpfer
- 17: Druckluftzufuhrrohr
- 18: Einlaßrohr
- 19: Tür
- 20: Transportleitung
- 21: Motor
- 22: Reinigungsdüsen
- 23: Abfuhrleitung
- 24: Seitenwand
- 25: Luftheizung
- 26: Schaltschrank

## Patentansprüche

1. Entstaubungsanlage zur Abscheidung von Stäuben aus einem Gasstrom, insbesondere bei der Cigarettenherstellung, bei der der staubhaltige Gasstrom über ein Staubabscheidefilter (3) geführt und das gereinigte Gas mittels eines Gebäses (13) an die Umgebung abgegeben wird, und bei der der abgeschiedene Staub über eine Transportleitung (8, 20) an eine Staubsammelstelle überführt wird: dadurch gekennzeichnet, daß die Entstaubungsanlage in ein aus zwei zusammengesetzten begehbaren Containern (1, 2) bestehendes Raummodul eingebaut ist, wobei jeder Container Teile der Entstaubungsanlage trägt und die Container (1, 2) am Einsatzort zur Bildung der Entstaubungsanlage zusammensetzbar ausgebildet sind.

2. Entstaubungsanlage nach Anspruch 1, dadurch gekennzeichnet, daß mehrere gleichartige Raummodule zu einer Mehrfach-Entstaubungsanlage zusammensetzbar sind, wobei die Transportleitungen (8, 20) unter Einbeziehung aller Raummodule quer durch die Mehrfach-Entstaubungsanlage geführt sind.

3. Entstaubungsanlage nach Anspruch 1 oder 2, dadurch gekennzeichnet, daß die Transportleitung (8, 20) doppelt ausgeführt ist und jede Entstaubungsanlage eine Umschalteinrichtung zur wahlweisen Anschaltung einer der Transportleitungen (8, 20) an den oder die Staubscheidefilter (3) enthält.

4. Entstaubungsanlage nach einem der Ansprüche 1 - 3, dadurch gekennzeichnet, daß die Transportleitungen (8, 20) durch eine Zellenradschleuse (7) von dem oder den Staubabscheidefilter(n) (3) abgetrennt sind.

5. Entstaubungsanlage nach Anspruch 1, dadurch gekennzeichnet, daß das Raummodul Luftzufuhr- und Abfuhröffnungen (12, 14) zur Lüftung des Raummoduls aufweist.

6. Entstaubungsanlage nach Anspruch 1, dadurch gekennzeichnet, daß der Staubabscheidefilter (3) in zeitlichen Abständen mittels impulsförmiger Druckluftzufuhr gereinigt wird.

7. Entstaubungsanlage nach Anspruch 1, dadurch gekennzeichnet, daß das Raummodul auf dem Dach eines Fabrikgebäudes aufstellbar ist.

8. Entstaubungsanlage nach einem oder mehreren der vorhergehenden Ansprüche, dadurch gekennzeichnet, daß das Raummodul mit einer geregelten Luftheizung mit geregeltem Außenluftanteil ausgerüstet ist.
